# EUROPEAN PATENT APPLICATION

(11) **EP 4 815 110 A1**
(43) Date of publication of application: **30.09.2026**
(21) Application number: 26155861.3
(22) Date of filing: 02.02.2026
(51) Int. Cl.: H01M 10/613, H01M 10/625, H01M 10/6554, H01M 10/658, H01M 50/209

(54) **HEAT INSULATION STRUCTURE FOR BATTERY**

(30) Priority: 26.03.2025 JP 2025052331
(71) Applicant: Toyota Jidosha Kabushiki Kaisha, Toyota-shi, Aichi-ken 471-8571 (JP)
(72) Inventor: ASANUMA, Kentaro, TOYOTA-SHI, AICHI-KEN 471-8571 (JP)
(74) Representative: Cabinet Beau de Loménie

(57) **Abstract**

A heat insulation structure for a battery. In a battery pack, an endplate (38) is disposed at an interval from a battery cell (28) that is disposed at an end of a battery module (22), and an end-side heat insulator (42) is interposed between the battery cell (28) and the endplate (38).

## Description

### BACKGROUND OF THE INVENTION

### 1. Field of the Invention

The present invention relates to a heat insulation structure for a battery.

### 2. Description of Related Art

Japanese Unexamined Patent Application Publication No. 2024-92300 (JP 2024-92300 A) discloses an invention about a battery pack. In this battery pack, battery cells are supported by a bottom portion of a battery case, and the battery cells are configured to be cooled by a cooler disposed on the lower side of the bottom portion.

### SUMMARY OF THE INVENTION

In the above related art, battery cells are laminated in a predetermined direction and a battery module is constituted. In the case of such a constitution, a configuration in which a battery cell disposed at an end of the battery module is supported by an endplate is sometimes employed.

However, when this configuration is employed, the battery cell disposed at the end of the battery module is cooled not only by the cooler but also by the heat release from the endplate, and therefore, there is a possibility that an end side of the battery module is more easily cooled than the other portion. That is, when this configuration is employed, there is a possibility that temperature differences are generated among the battery cells constituting the battery module at the time of the cooling of the battery module.

In consideration of the above circumstance, the present disclosure has an object to provide a heat insulation structure for a battery that can restrain temperature differences from being generated among battery cells constituting a battery module at the time of the cooling of the battery module.

A heat insulation structure for a battery according to a first aspect includes: a plurality of battery cells that is arrayed in an array direction on a bottom portion of a battery case and that constitutes a battery module; a cooling unit that is disposed on the lower side of the bottom portion and that is able to cool the battery cells through the bottom portion; an endplate that is supported by the bottom portion and that is disposed at an interval from a battery cell in the array direction while being able to support the battery cell, the battery cell being disposed at an end of the battery module in the array direction; and an end-side heat insulator that is interposed between the battery cell and the endplate.

In the heat insulation structure for the battery according to the first aspect, on the bottom portion of the battery case, the battery cells are arrayed in the array direction, and thereby, the battery module is constituted. On the other hand, on the lower side of the bottom portion of the battery case, the cooling unit is disposed, and the cooling unit can cool the battery cells and the battery module through the bottom portion.

Further, on the bottom portion of the battery case, the endplate is supported, and the endplate supports the battery cell disposed at the end of the battery module in the array direction.

When this configuration is employed, the battery cell disposed at the end of the battery module is cooled not only by the cooling unit but also by the heat release from the endplate, and therefore, there is a possibility that a portion of the end side of the battery module is more easily cooled than the other portion. That is, when this configuration is employed, there is a possibility that temperature differences are generated among the battery cells constituting the battery module at the time of the cooling of the battery module.

In the aspect, the endplate is disposed at an interval from the battery cell disposed at the end of the battery module, and the end-side heat insulator is interposed between the battery cell and the endplate.

Therefore, in the aspect, it is possible to restrain the battery cell disposed at the end of the battery module from being cooled by the heat release from the endplate. As a result, it is possible to restrain a temperature difference from being generated between the battery cell disposed at the end of the battery module and a battery cell adjacent to the battery cell.

A heat insulation structure for a battery according to a second aspect, in the heat insulation structure for the battery according to the first aspect, may further include an inter-cell heat insulator that is interposed among the battery cells, in which the thickness of the end-side heat insulator in the array direction is thinner than the thickness of the inter-cell heat insulator in the array direction.

In the heat insulation structure for the battery according to the second aspect, the inter-cell heat insulator is interposed among the battery cells, and the thickness of the end-side heat insulator in the array direction is thinner than the thickness of the inter-cell heat insulator in the array direction. Therefore, the aspect provides a structure that is more suitable for the restraint of the heat conduction among the battery cells than for the restraint of the heat conduction between the endplate and the battery cell disposed at the end of the battery module, and contributes to the restraint of the occurrence of thermal propagation in the battery module.

As a heat insulation structure for a battery according to a third aspect, in the heat insulation structure for the battery according to the first aspect or the second aspect, the end-side heat insulator may be composed of an elastic material.

In the heat insulation structure for the battery according to the third aspect, the end-side heat insulator is composed of the elastic material, and it is possible to cause the end-side heat insulator to closely contact with the endplate and the battery cell disposed at the end of the battery module.

As described above, the heat insulation structure for the battery according to the present disclosure has a beneficial effect of restraining temperature differences from being generated among battery cells constituting a battery module at the time of the cooling of the battery module.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view (a sectional view taken along line 1-1 in FIG. 2) schematically showing the configuration of a principal part of a battery pack to which a heat insulation structure for a battery according to an embodiment is applied; and
FIG. 2 is a plan view schematically showing the configuration of the battery pack to which the heat insulation structure for the battery according to the embodiment is applied.

### DETAILED DESCRIPTION OF EMBODIMENTS

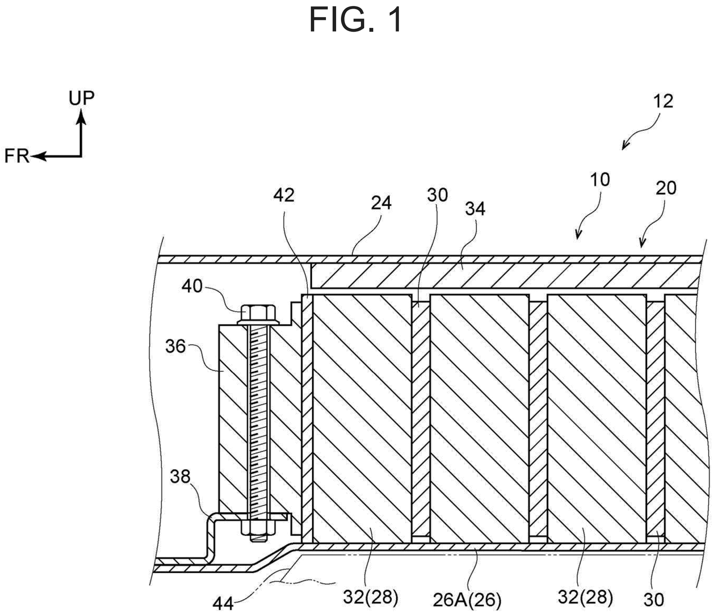

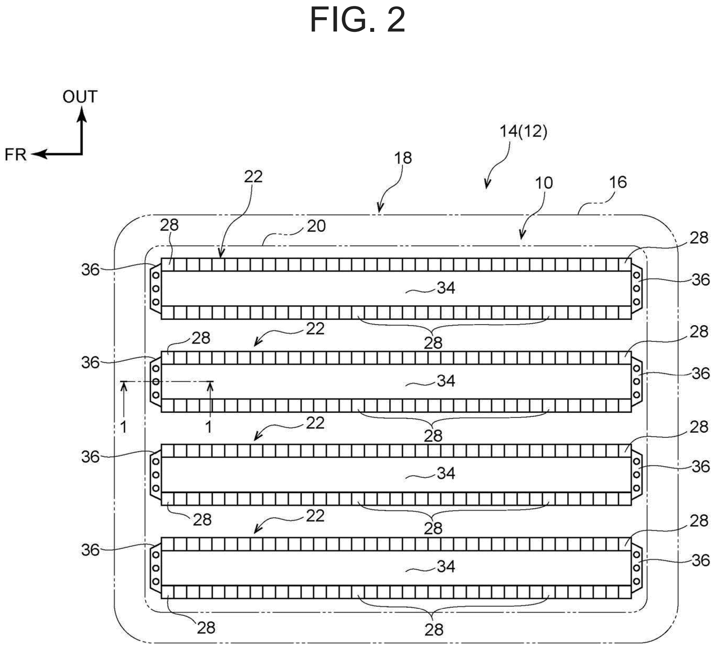

An exemplary embodiment of a heat insulation structure for a battery according to the present disclosure will be described below with use of FIG. 1 and FIG. 2. A battery pack 10 to which the heat insulation structure for the battery according to the embodiment is applied can be mounted on a vehicle 12 such as a hybrid electric vehicle, a plug-in hybrid electric vehicle, and a battery electric vehicle.

First, a schematic configuration of the vehicle 12 on which the battery pack 10 is mounted will be described. An arrow FR, which is shown in the figures, when necessary, indicates a vehicle front side, an arrow UP indicates a vehicle upper side, and an arrow OUT indicates an outer side in a vehicle-width direction.

As shown in FIG. 2, a vehicle body 14 of the vehicle 12 includes an unillustrated front part that constitutes a portion on the vehicle front side and that is made of die-cast aluminum, a center part 18 that constitutes a central portion in a vehicle front-rear direction and that includes the battery pack 10 and a center frame 16 holding the battery pack 10 and having a frame shape in planar view, and an unillustrated rear part that constitutes a portion on a vehicle rear side and that is made of die-cast aluminum. On the front part, an unillustrated power unit including a motor and the like is mounted. The power unit is configured to be driven by electric power supplied from the battery pack 10, and thereby, the vehicle 12 travels.

As shown in FIG. 1, the battery pack 10 is configured to include a battery case 20 that constitutes an outer shell of the battery pack 10 and a plurality of battery modules 22 that is housed in the battery case 20.

The battery case 20, in which a main portion is composed of an aluminum alloy, includes a case upper portion 24 that constitutes a portion on a vehicle upper side and a case lower portion 26 that constitutes a portion on a vehicle lower side.

Moreover, in the interior of the battery case 20, on the vehicle upper side of a bottom wall portion 26A as a bottom portion of the case lower portion 26, the battery modules 22 are arrayed at a predetermined interval from each other in the vehicle-width direction, such that the longitudinal direction is the vehicle front-rear direction.

The battery module 22 is configured to include a plurality of battery cells 28 and a plurality of inter-cell heat insulators 30. The battery cell 28 is configured to include a cell case portion 32 that constitutes an outer shell of the battery cell 28 and that has a flat rectangular parallelepiped shape as an outer shape, and an unillustrated electrode body that is disposed on the inner side of the cell case portion 32.

The battery cells 28 configured as described above are continuously arrayed in the vehicle front-rear direction, such that the thickness direction is the vehicle front-rear direction. That is, in the embodiment, the array direction of the battery cells 28 coincides with the longitudinal direction of the battery module 22. Moreover, the inter-cell heat insulator 30 is interposed between adjacent battery cells 28.

For example, the inter-cell heat insulator 30 is formed in a sheet shape by an elastic material such as a foam material, and is held in a state of being sandwiched between the adjacent battery cells 28. Further, the inter-cell heat insulator 30 is disposed along the longitudinal direction of the battery cell 28, from a lower end side of the battery cell 28 to an upper end side of the battery cell 28. On the vehicle upper side of the battery cells 28 and the inter-cell heat insulators 30, a cover board 34 made of resin is disposed. The cover board 34 has a plate shape that extends in the vehicle front-rear direction such that the plate thickness direction is the vehicle-height direction.

Moreover, battery cells 28 disposed at both end portions of each battery module 22 in the longitudinal direction of the battery module 22, that is, at ends of the battery module 22 in the array direction of the battery cells 28 are supported by the bottom wall portion 26A of the case lower portion 26 through endplates 36.

The endplate 36 is composed of resin, metal, or the like, and is formed in a flat rectangular parallelepiped shape in which the thickness direction is the vehicle front-rear direction and the longitudinal direction is the vehicle-width direction. The endplate 36 is attached to a stay 38 provided at the bottom wall portion 26A of the case lower portion 26, through a fastening member 40.

Further, the endplate 36 is disposed at a vehicle front-rear directional interval from the battery cell 28 disposed at the end of the battery module 22, and an end-side heat insulator 42 is interposed between the battery cell 28 and the endplate 36.

For example, the end-side heat insulator 42 is formed, by an elastic material such as a foam material, in a sheet shape in which the thickness of the end-side heat insulator 42 in the vehicle front-rear direction is thinner than the thickness of the inter-cell heat insulator 30 in the vehicle front-rear direction, and is held in a state of being sandwiched between the endplate 36 and the battery cell 28. Further, the end-side heat insulator 42 is disposed along the longitudinal direction of the battery cell 28, from a lower end side of the battery cell 28 to an upper end side of the battery cell 28.

On the other hand, on the vehicle lower side of the bottom wall portion 26A of the case lower portion 26, a cooling unit 44 is disposed. The cooling unit 44 is configured to include a plurality of flow passage portions that extends in the vehicle front-rear direction and through which a refrigerant flows, a surface of the cooling unit 44 on the vehicle upper side is disposed along a surface of the bottom wall portion 26A on the vehicle lower side, and an unillustrated heat conduction sheet is interposed between the bottom wall portion 26A and the cooling unit 44. That is, in the embodiment, the cooling unit 44 can cool the battery cells 28 through the bottom wall portion 26A.

### Actions and Effects of the Embodiment

Next, the actions and effects of the embodiment will be described.

In the embodiment, as shown in FIG. 1, on the bottom wall portion 26A of the battery case 20, the battery cells 28 are arrayed in the vehicle front-rear direction, and thereby, the battery module 22 is constituted. On the other hand, on the lower side of the bottom wall portion 26A, the cooling unit 44 is disposed, and the cooling unit 44 can cool the battery cells 28 and the battery module 22 through the bottom wall portion 26A.

Further, on the bottom wall portion 26A of the battery case 20, the endplate 36 is supported, and the endplate 36 supports the battery cell 28 disposed at the end of the battery module 22 in the vehicle front-rear direction.

When this configuration is employed, the battery cell disposed at the end of the battery module is cooled not only by the cooling unit but also by the heat release from the endplate, and therefore, there is a possibility that a portion of the end side of the battery module is more easily cooled than the other portion. That is, when this configuration is employed, there is a possibility that temperature differences are generated among the battery cells constituting the battery module at the time of the cooling of the battery module.

In the embodiment, the endplate 36 is disposed at an interval from the battery cell 28 disposed at the end of the battery module 22, and the end-side heat insulator 42 is interposed between the battery cell 28 and the endplate 36.

Therefore, in the embodiment, it is possible to restrain the battery cell 28 disposed at the end of the battery module 22 from being cooled by the heat release from the endplate 36. As a result, it is possible to restrain a temperature difference from being generated between the battery cell 28 disposed at the end of the battery module 22 and a battery cell 28 adjacent to the battery cell 28.

Further, in the embodiment, the inter-cell heat insulator 30 is interposed among the battery cells 28, and the thickness of the end-side heat insulator 42 in the vehicle front-rear direction is thinner than the thickness of the inter-cell heat insulator 30 in the vehicle front-rear direction. Therefore, the embodiment provides a structure that is more suitable for the restraint of the heat conduction among the battery cells 28 than for the restraint of the heat conduction between the endplate 36 and the battery cell 28 disposed at the end of the battery module 22, and contributes to the restraint of the occurrence of thermal propagation in the battery module 22.

Further, in the embodiment, the end-side heat insulator 42 is composed of the elastic material, and it is possible to cause the end-side heat insulator 42 to closely contact with the endplate 36 and the battery cell 28 disposed at the end of the battery module 22.

As described above, in the embodiment, it is possible to restrain temperature differences from being generated among the battery cells 28 constituting the battery module 22 at the time of the cooling of the battery module 22.

### Supplemental Explanation about Embodiment

In the above-described embodiment, the inter-cell heat insulator 30 and the end-side heat insulator 42 are composed of an elastic material such as a foam material, but the inter-cell heat insulator 30 and the end-side heat insulator 42 may be composed of rock wool or glass wool, depending on specifications of the battery pack 10, and the like.

Further, in the above-described embodiment, the thickness of the end-side heat insulator 42 in the vehicle front-rear direction is thinner than the thickness of the inter-cell heat insulator 30 in the vehicle front-rear direction, but the thicknesses of the end-side heat insulator 42 and the inter-cell heat insulator 30 may be set to almost the same thickness, depending on specifications of the battery pack 10, and the like.

Further, in the embodiment, the battery module 22 is constituted by the battery cells 28 that are continuously arrayed in the vehicle front-rear direction, but the array direction of the battery cells 28 may be set to a direction other than the vehicle front-rear direction, for example, to the vehicle-width direction, depending on specifications of the battery pack 10, and the like.

## Claims

1. A heat insulation structure for a battery, the heat insulation structure comprising:
a plurality of battery cells (28) that is arrayed in an array direction on a bottom portion of a battery case (20) and that constitutes a battery module (22);
a cooling unit (44) that is disposed on a lower side of the bottom portion and that is able to cool the battery cells (28) through the bottom portion;
an endplate (38) that is supported by the bottom portion and that is disposed at an interval from a battery cell (28) in the array direction while being able to support the battery cell (28), the battery cell (28) being disposed at an end of the battery module (22) in the array direction; and
an end-side heat insulator (42) that is interposed between the battery cell (28) and the endplate (38).

2. The heat insulation structure according to claim 1, further comprising an inter-cell heat insulator (30) that is interposed among the battery cells (28), wherein
a thickness of the end-side heat insulator (42) in the array direction is thinner than a thickness of the inter-cell heat insulator (30) in the array direction.

3. The heat insulation structure according to claim 1 or 2, wherein the end-side heat insulator (42) is composed of an elastic material.
